# EUROPÄISCHE PATENTSCHRIFT

(11) **EP 1 871 668 B1**
(45) Veröffentlichungstag und Bekanntmachung des Hinweises auf die Patenterteilung: **22.06.2011**
(21) Anmeldenummer: 06722797.5
(22) Anmeldetag: 19.04.2006
(51) Int. Cl.: B65B 1/46, G01G 15/00

(54) **VERPACKUNGSMASCHINE**
PACKAGING MACHINE
MACHINE A EMBALLER

(30) Priorität: 19.04.2005 DE 102005018251
(43) Veröffentlichungstag der Anmeldung: 02.01.2008
(73) Patentinhaber: Multivac Sepp Haggenmüller GmbH & Co. KG, 87787 Wolfertschwenden (DE)
(72) Erfinder: EHRMANN, Elmar, Eugen, 87730 Bad Grönenbach (DE); SLOMP, Tieme, Jan, 87730 Bad Grönenbach (DE); BOEKSTEGERS, Hans-Joachim, 82319 Starnberg (DE)
(74) Vertreter: Grünecker, Kinkeldey, Stockmair & Schwanhäusser Anwaltssozietät
(86) Internationale Anmeldenummer: PCT/DE2006/000678
(87) Internationale Veröffentlichungsnummer: WO 2006/111141

(56) Entgegenhaltungen:
- DE-A1- 4 409 908
- DE-A1- 10 232 136
- GB-A- 935 142
- US-A- 2 712 408
- US-A- 4 230 195

## Beschreibung

Die Erfindung betrifft eine Verpackungsmaschine und ein Verfahren zur Herstellung von Packungen durch Verpacken von Packgut in Verpackungen nach den Oberbegriffen der Ansprüche 1 und 16.

Derartige handelsübliche Verpackungsmaschinen, wie z.B. in der GB 935 142 offenbart, sind mit unterschiedlichen Bearbeitungsstationen, z.B. Versiegelungsstationen, zum Versiegeln von mit Packgut gefüllten Verpackungen versehen.

Dabei wird zwischen mehreren Arten von Verpackungsmaschinen unterschieden, z.B. solchen, die von einander getrennte einzelne, mit Packgut gefüllte Verpackungen versiegeln (sogenannte Traysealer), und Verpackungsmaschinen, wie Tiefziehmaschinen, bei denen eine Mehrzahl von Packungen zusammenhängend hergestellt, gefüllt und versiegelt wird. Beim letzteren Maschinentyp wird die genannte Mehrzahl von zusammenhängenden Packungen anschließend einer Schneideinheit zugeführt, die die einzelnen Packungen aus dem Gesamtverbund ausschneidet. Bei Verpackungsmaschinen der genannten Art werden die versiegelten Packungen über eine Austrageinheit ausgetragen.

Je nach Art des zu verpackenden Packgutes ist anschließend eine Gewichtsbestimmung und eine Etikettierung erforderlich. Zu diesem Zweck werden bislang entsprechende Wiege- und Etikettiermaschinen vorgesehen, die der Austrageinheit nachgeordnet werden. Diese Wiege- und Etikettiermaschinen arbeiten unabhängig von der Verpackungsmaschine, so dass zwischen beiden Maschinen eine Vereinzelungseinheit zur Beschickung der Wiege- und Etikettiervorrichtung mit einzelnen Packungen angeordnet werden muss. Um das Wiegen und Etikettieren unabhängig vom Austrag aus der Verpackungsmaschine vorzunehmen, wird häufig auch eine Puffereinheit zur Aufnahme von Packungen vor der Vereinzelung für die Wiege- und Etikettiermaschine vorgesehen.

Durch diese Vorgehensweise wird eine große Transportstrecke für den Gesamtaufbau erforderlich, was einen entsprechenden Platzbedarf mit sich bringt. Darüber hinaus müssen die Bedienpersonen beide Maschinen getrennt voneinander an verschiedenen Eingabeeinheiten einstellen und überwachen.

Weiterhin sind im Handel handbetätigte Maschinen bekannt geworden, bei denen mit Packgut gefüllte Schalen in eine schubladenartige Schalenaufnahme eingelegt und durch eine in die Schublade integrierte Wiegeeinheit gewogen werden. Die gefüllten Schalen werden manuell eingelegt, wobei nach dem Einlegen jeder einzelnen Schale die Wiegestation manuell auf den Nullwert zurückgesetzt wird. Anschließend wird die schubladenartige Aufnahme in die Maschine eingeschoben und die Schalen versiegelt. Nach dem erneuten Öffnen des Einschubs werden von den Maschinen einzelne Etiketten mit Gewichtsangaben ausgedruckt, die manuell auf die zugehörigen versiegelten Packungen aufgebracht werden. Bei einer solchen manuellen Maschine entfällt die oben angeführte nachteilige, große Transportstrecke. Sie ermöglicht jedoch keine automatische Verpackung des Packgutes und ist insbesondere anfällig gegenüber Fehlern der Bedienperson, da einerseits offene Packungen gewogen und die Etiketten nach dem Versiegeln manuell zugeordnet werden müssen. Darüber hinaus ist eine einwandfreie Wägung mit einer beweglichen Wiegeeinheit nur unter Schwierigkeiten zu gewährleisten.

Aufgabe der Erfindung ist es daher, eine Verpackungsmaschine vorzuschlagen, die mit geringerem Platzbedarf auskommt und eine bessere Handhabung ermöglicht.

Diese Aufgabe wird ausgehend von einem Stand der Technik der einleitend genannten Art durch die kennzeichnenden Merkmale der Ansprüche 1 und 16 erfüllt.

Durch die in den Unteransprüchen genannten Maßnahmen sind vorteilhafte Ausführungen und Weiterbildungen der Erfindung möglich.

Dementsprechend zeichnet sich eine erfindungsgemäße Verpackungsmaschine dadurch aus, dass die Wiegestation und/oder die wenigstens eine Bearbeitungsstation wenigstens eine Steuereinheit umfassen, mittels der die Arbeitsgeschwindigkeit der Wiegestation mit der Arbeitsgeschwindigkeit der vorgeordneten Bearbeitungsstation synchronisierbar ist.

Auf diese Weise kann eine separate Vereinzelungs- und/oder Puffereinheit zwischen der vorgeordneten Bearbeitungsstation der Verpackungsmaschine und der Wiegestation entfallen, da die Bearbeitungsstation und die Wiegestation miteinander synchronisiert arbeiten können. Auch die Einstellung und Anpassung der Wiegestation an die Verpackungsmaschine bzw. die Bearbeitungsstation oder Bearbeitungsstationen ist bei einer erfindungsgemäßen Verpackungsmaschine verbessert, da die Steuerungseinheit die Synchronisation übernimmt. Auf diese Weise ist ein deutlich kompakterer Aufbau und eine verbesserte Handhabung möglich.

Erfindungsgemäß wird die Wiegestation zur Aufnahme von zwei oder mehreren versiegelten Packungen ausgebildet.

Dabei kann eine Erfassung des Gewichts von zwei oder mehreren Packungen sowie eine Erfassung des durch anschließende Zufuhr oder Abfuhr einer einzelnen Packung oder einer Anzahl gemeinsam zu wiegender Packungen veränderten Gewichts vorgesehen werden. Dabei ist das Gewicht einer einzelnen Packungen oder einer Anzahl gemeinsam zu wiegender Packungen aus der Differenz zwischen so ermittelten Gewichten bestimmbar.

Durch diese Ausbildung der Wiegevorrichtung kann auch bei kleinerem Packungsformat eine größere Wiegeeinheit dadurch genutzt werden, dass mehrere Packungen gleichzeitig mit ihrem Summengewicht gewogen werden.

In dieser Ausführungsform kann beispielsweise die Gesamtzahl der von der vorgeordneten Bearbeitungsstation in einem Arbeitstakt fertiggestellten Packungen gemeinsam der Wiegestation zugeführt werden. Die Gewichtsbestimmung einzelner Packungen oder unterschiedlicher Gruppen von gemeinsam zu wiegenden Packungen kann sodann durch eine separate Abfuhr von der Wiegestation vorgenommen werden. Die einzelnen zu bestimmenden Gewichte können dabei über ein Subtraktionsverfahren aus dem Gesamtgewicht zweier oder mehrerer Packungen bestimmt werden, wobei zunächst das Gesamtgewicht und sodann das der Abfuhr der versiegelten Packungen reduzierte Gewicht bestimmt und von dem zuvor ermitteltem Gesamtgewicht subtrahiert wird.

Eine erfindungsgemäße Synchronisierbarkeit kann dabei beispielsweise durch zwei oder mehrere Steuereinheiten bewirkt werden, die aufeinander abgestimmt sind. Diese Abstimmung kann auf unterschiedliche Art und Weise vorgenommen werden, z.B. durch Übertragung von Daten und/oder Steuersignalen. Die Übertragung kann dabei uni- oder bidirektional vorgesehen werden. In einer besonderen Ausführungsform wird zur Übertragung von Daten- und Steuersignalen ein Bussystem vorgesehen, mittels dem verschiedene Steuereinheiten miteinander kommunizieren können. Die Übertragungsstrecke kann dabei über Kabelverbindungen oder aber auch drahtlos realisiert sein.

Die Wiegestation kann in eine Bearbeitungsstation, z.B. in die Versiegelungsstation integriert oder dieser auch nachgeordnet werden. Wesentlich ist dabei, dass der Wiegevorgang selbst erst an der versiegelten Packung vorgenommen wird, um fehlerhafte Gewichtsangaben, z.B. durch nachträgliche Entnahme von Packgut, zu vermeiden.

In einer Weiterbildung der Erfindung wird eine gemeinsame Steuereinheit für die Wiegestation und die Verpackungsmaschine bzw. deren Bearbeitungsstationen vorgesehen. Die Wiegestation wird auf diese Weise in die Verpackungsmaschine integriert. Dies bedeutet jedoch nicht zwangsweise die gegenständliche Verbindung der Wiegestation mit der Verpackungsmaschine, beispielsweise an deren Maschinenrahmen. Sofern es aus Gründen der Funktonsicherheit für die Wiegestation erforderlich ist, diese separat aufzustellen und zu befestigen, so ist dies auch bei einer derart integrierten Wiegestation ohne Weiteres möglich. Wesentlich für die Erfindung ist die funktionale Integration der Wiegestation in die Verpackungsmaschine.

Vorteilhafterweise wird die Wiegestation stationär angeordnet, d.h. sie steht zumindest während des Betriebes, bevorzugt jedoch dauerhaft an ihrem vorgegebenen Arbeitsort. Dadurch werden nach dem einmaligen korrekten Aufstellen der Wiegevorrichtung Fehler vermieden, die durch eine etwaige Bewegung der Wiegestation und/oder durch eine fehlerhafte Ausrichtung der Wiegestation verursacht werden können.

Die Zufuhr der zu wiegenden Packungen zur Wiegestation wird vorzugsweise nicht manuell, sondern automatisch durch eine Zufuhreinheit vorgenommen. Bevorzugt wird diese Zufuhreinheit ebenfalls mit der Arbeitsgeschwindigkeit der Bearbeitungsstation und/oder der Wiegestation synchronisierbar ausgebildet, um die Synchronisation zwischen Bearbeitungsstation und Wiegestation nicht zu stören.

In einer Weiterbildung dieser Ausführungsform wird die Verpackungsmaschine insgesamt als automatische Maschine ausgestaltet, bei der die Verpackungen zumindest von dem Füllvorgang an automatisch von und zu den einzelnen Bearbeitungs- und Kontrollstationen der Verpackungsmaschine transportiert werden.

In einer besonderen Ausführungsform der Erfindung wird die Zufuhreinheit zur Zufuhr der Packungen zur Wiegestation zwischen der Arbeitsstation und der Wiegestation angeordnet, wobei die Wiegestation als von der Bearbeitungsstation getrennte Einheit vorgesehen ist. dies hat den Vorteil, dass der Standort und die Befestigung der Wiegestation unabhängig von der Bearbeitungsstation wählbar ist. Etwaige durch den Betrieb der Bearbeitungsstation verursachte Störungen beim Wiegevorgang können so vermieden werden.

Vorteilhafterweise wird die Bearbeitungsstation getaktet, wobei die Zufuhreinheit zur Zufuhr der versiegelten Packungen zur Wiegestation im Takt dieser Bearbeitungsstation arbeitet.

Ein solcher Taktbetrieb entspricht beispielsweise der Funktionsweise der Versiegelungsstation in bekannten Verpackungsmaschinen, bei denen einzelne mit Packgut gefüllte Schalen versiegelt werden (Traysealer). Dabei können durchaus mehrere einzeln vorliegende Packungen in einem Arbeitstakt versiegelt werden. Durch den Taktbetrieb wird die vorgesehene Anzahl versiegelter Packungen mit jedem Takt aus der Versiegelungsstation freigegeben und über die Zufuhreinheit der Wiegestation zugeführt. Die Taktung der Zufuhreinheit im Takt der Bearbeitungsstation sorgt dabei für einen zuverlässigen Warenfluss aus der Bearbeitungsstation, wobei die Wiegestation an diese Arbeitsgeschwindigkeit erfindungsgemäß angepasst wird.

In einer anderen Ausführungsform werden, wie oben angeführt, die einzelnen Packungen aus einer Gesamtanordnung von Packungen mittels einer Schneidstation ausgeschnitten, wobei auch hier ein Taktbetrieb möglich ist, so dass eine Mehrzahl zu wiegender Packungen getaktet bereitgestellt und der Wiegestation zuzuführen sind.

Grundsätzlich ist auch für die Wiegestation ein entsprechender Taktbetrieb denkbar, wenn eine entsprechend getaktete Abfuhreinheit für die Wiegestation vorgesehen wird. Dabei muss der Arbeitstakt der Wiegestation nicht zwangsläufig im Gleichtakt mit der vorgeordneten Bearbeitungsstation laufen. Je nach der Anzahl der in einem Takt von der Bearbeitungsstation bereitgestellter Packungen ist bei der Wiegestation auch ein ganzzahliges Vielfaches dieses Taktes als Arbeitstakt denkbar, um jede Warenpackung der zugeführten Vielzahl von Packungen zu wiegen.

In einer bevorzugten Ausführungsform wird jedoch die Wiegestation nicht getaktet, sondern kontinuierlich betrieben, d.h. die Wiegestation ist für eine Gewichtserfassung während der Bewegung einer oder mehrerer Packungen ausgebildet. Ein solcher dynamischer Wiegevorgang, bei dem die Packungen kontinuierlich durch oder über die Wiegestation bewegt werden, lässt sich leichter in eine solche Verpackungsmaschine integrieren bzw. ermöglicht eine höhere Bearbeitungsgeschwindigkeit der Wiegestation. Darüberhinaus werden Fehler durch das Stoppen und Anfahren der zu wiegenden Packungen vermieden. Insbesondere wird die Position der Packungen auf bzw. in der Wiegestation nicht durch Stopp- und/oder Beschleunigungsvorgänge beeinflusst und etwaige dadurch hervorgerufene Fehler unterbunden.

In einer Weiterbildung der Erfindung wird eine Abfuhreinheit zum Abtransport der gewogenen Packungen von der Wiegestation vorgesehen, die getaktet oder, im Falle des oben angeführten dynamischen Wiegens, kontinuierlich arbeitet.

Die Abfuhreinheit der Wiegestation kann beispielsweise als Transportband ausgebildet sein. Dabei kann die Wiegestation wie bei bekannten Wiege- und Etikettiervorrichtungen ein Wägeband umfassen. Das Wiegen der zu wiegenden Packungen findet dabei unmittelbar auf dem Transportband statt, das dabei entweder, im Falle der oben angegebenen dynamischen Wägung, kontinuierlich oder getaktet angetrieben wird.

Das Wägeband wird hierbei bevorzugt mit einer Steuereinheit versehen, um die Bandgeschwindigkeit erfindungsgemäß mit der Arbeitsgeschwindigkeit der vorgeordneten Bearbeitungsstation, beispielsweise einer Versiegelungsstation und/oder Schneideinheit und/oder einer zwischengeschalteten Zufuhreinheit zu synchronisieren.

Auch bei einer getakteten Zufuhr der zu wiegenden Packungen ist dabei ein kontinuierlicher Betrieb des Wägebandes denkbar. Es ist lediglich sicherzustellen, dass stets eine ausreichende Zeit für die einzelnen Gewichtsmessungen zur Verfügung steht.

Dabei ist beispielsweise eine einzelne Wägung denkbar, wobei die Zufuhreinheit derart ausgestaltet wird, dass einzelne zu wiegende Packungen oder einzelne Gruppen von gemeinsam zu wiegenden Packungen für den entsprechenden Wiegevorgang auf der Wiegestation bzw. dem Wägeband abgelegt werden. Dies ist beispielsweise mit einem Greifer- oder Hebersystem denkbar, das eine Mehrzahl von Packungen aus der vorgeordneten Bearbeitungsstation, beispielsweise einer Versiegelungs- oder Schneidstation entnimmt und auf der Wiegestation ablegt. Dabei können die Gesamtmengen der durch die Zufuhreinheit zuführbaren Packungen oder auch, im Falle der oben angegebenen Einzelwägung, sukzessive einzelne Packungen auf der Wiegestation abgelegt werden.

Auch in dieser Ausführungsform ist wiederum ein kontinuierlicher oder getakteter Umlauf eines Wägebandes denkbar.

Bei mehrspurigen Verpackungsmaschinen kann die Wiegestation mehrere nebeneinander angeordnete umlaufende Wägebänder oder Riemen aufweisen, sodass aus einer Reihe nebeneinander angeordneter Packungen durch getrennten Antrieb einzelner Riemen oder Bänder die Packungen getrennt voneinander abgeführt werden können. Das Gewicht kann dabei wiederum im oben beschriebenen Subtraktionsverfahren bestimmt werden.

Um zuverlässig die getrennte Abfuhr von Packungen von einem Wägeband zu gewährleisten empfiehlt es sich, diese mit einem Mindestabstand zueinander auf dem Wägeband abzusetzen. Dies wird bevorzugt durch die Zufuhreinheit vorgenommen, die die Packungen von der vorgeordneten Bearbeitungsstation der Wiegestation zuführt. In einer besonderen Ausführungsvariante einer solchen Zufuhreinheit werden beispielsweise Schubelemente vorgesehen, die die zu wiegenden Packungen auf die Wiegestation schieben. Sofern der Abstand der Schubelemente entsprechend groß bemessen wird, kann dadurch zugleich ein vorgegebener Abstand zwischen den zu wiegenden Packungen vorgesehen werden.

Die Verpackungsmaschine wird bevorzugt mit einer Etikettierstation versehen, die der Wiegestation nachgeordnet ist. Auf diese Weise kann die erfindungsgemäße Verpackungsmaschine die vollständige Funktion der bisher üblichen Anordnung mit Verpackungsmaschine und davon getrennter Wiege- und Etikettiermaschine wahrnehmen. Die verpackte Ware kann demnach aus einer solchen Verpackungsmaschine mit integrierter Wiegestation fertig etikettiert mit Gewichtsangaben entnommen werden.

In einer vorteilhaften Weiterbildung dieser Ausführungsform wird die Etikettierstation zugleich zum Ausdruck von produktspezifischen und/oder gewichtsunabhängigen Daten verwendet. Derartige Etikettiermaschinen sind häufig bereits bei Verpackungsmaschinen vorgesehen, um beispielsweise Angaben über die Art des Produkts, Haltbarkeitsdaten oder dergleichen anzubringen. Im Falle einer nachgeordneten Wiege- und Etikettiermaschine waren demnach bislang stets zwei Etikettierstationen vorhanden. Erfindungsgemäß kann nunmehr eine solche Etikettierstation entfallen.

Eine erfindungsgemäße Verpackungsmaschine ist nicht nur geeignet, unterschiedliche Packungsgewichte zu bestimmen und die Packungen entsprechend zu etikettieren. Eine erfindungsgemäße Verpackungsmaschine kann vielmehr auch bei sogenannter gleichgewichtiger Ware sinnvoll eingesetzt werden, um zu kontrollieren, ob tatsächlich alle Packungen, die die Verpackungsmaschine verlassen, gleichgewichtig gefüllt sind. Gegebenenfalls kann für diese Anwendung einer solchen Verpackungsmaschine noch eine Sortierschleuse nachgeordnet werden, um die nicht gleichgewichtigen Packungen auszusortieren. Je nach Wunsch können diese nicht gleichgewichtigen Packungen dabei zugleich mit ihrem tatsächlichen Gewicht ausgezeichnet sein, so dass sie getrennt von der gleichgewichtigen Ware vertrieben werden können.

In einer besonderen Ausführungsform der Erfindung werden zudem ein oder mehrere weitere Kontrolleinheiten zur Kontrolle der mit der erfindungsgemäßen Verpackungsmaschine hergestellten Packungen vorgesehen. Derartige Kontrolleinheiten können der zusätzlichen Qualitätssicherung dienen. Solche Kontrolleinheiten können beispielsweise in Form eines Metalldetektors vorliegen, der der Kontrolle auf metallische Fremdkörper dient. Auch eine optische Kontrolle kann je nach Anwendungsfall sinnvoll sein, um die Packungen auf vollständige Beschriftung oder grundsätzlich auf das gewünschte Erscheinungsbild zu prüfen. Auch eine Leckstation kann als zusätzliche Kontrolleinheit vorgesehen werden, um Undichtigkeiten, z.B. bei Vakuumverpackungen oder in Inertgasverpackungen zu erkennen.

Diese zusätzlichen Kontrolleinheiten können dabei an unterschiedlicher Position, z.B. vor der Wiegestation, zwischen der Wiegestation und der Etikettierstation oder auch nach der Etikettierstation angeordnet werden. Die Integration solcher zusätzlicher Kontrolleinheiten in die Verpackungsmaschine dient wiederum einem kompakten Aufbau der Gesamtanordnung.

Verschiedene Ausführungsbeispiele der Erfindung sind in der Zeichnung dargestellt und werden nachfolgend anhand der Figuren näher erläutert.

Im einzelnen zeigen
- Figur 1: eine schematische Seitenansicht einer ersten Ausführungsform der Erfindung,
- Figur 2: eine Draufsicht auf eine Ausführung gemäß Figur 1,
- Figur 3: eine Seitenansicht einer zweiten Ausführungsform der Erfindung,
- Figur 4: eine Draufsicht auf eine Ausführung gemäß Figur 3,
- Figur 5: eine Draufsicht auf eine dritte Ausführungsform der Erfindung,
- Figur 6: eine Draufsicht auf eine vierte Ausführungsform der Erfindung,
- Figur 7: eine Draufsicht auf eine fünfte Ausführungsform der Erfindung und
- Figur 8: eine Draufsicht auf eine sechste Ausführungsform der Erfindung.

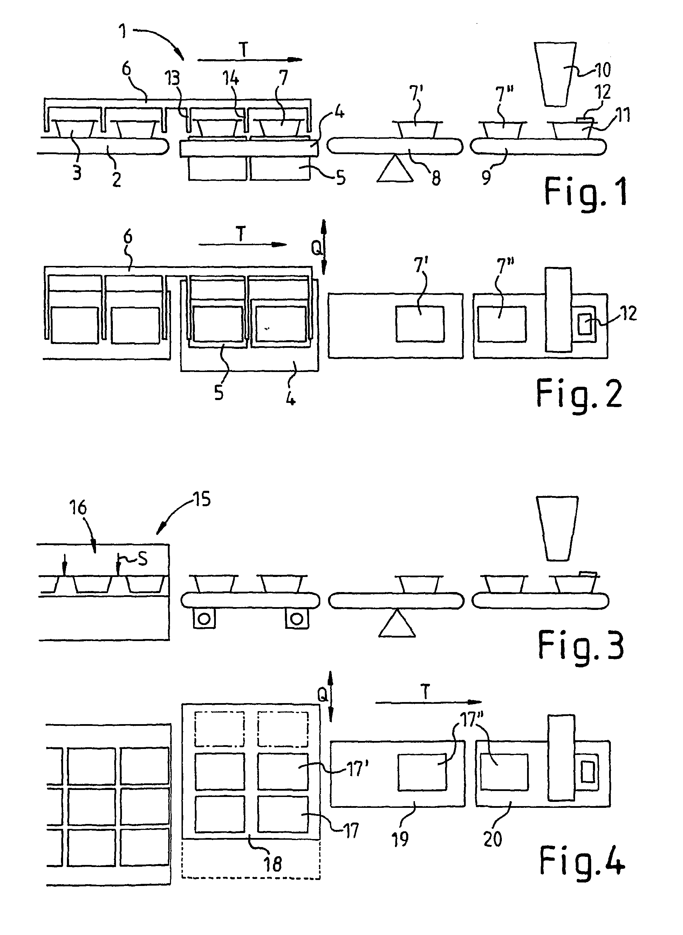

In der Seitenansicht von Figur 1 ist eine erfindungsgemäße Verpackungsmaschine 1 teilweise dargestellt. Zu erkennen ist das hintere Ende eines Füllbandes 2, in dem die zu verpackende Ware in einzelne Schalen 3, z.B. aus Kunststoff, eingefüllt wird.

In Transportrichtung T dem Füllband 2 nachgeordnet befindet sich eine in Richtung Q (vgl. Figur 2) quer verschiebbare Schalenaufnahme 4 mit einer Hubeinheit 5, um die Schalen 3 in die Schalenaufnahme 4 abzusenken bzw. aus der Schalenaufnahme 4 anzuheben.

Über dem hinteren Ende des Füllbandes 2 sowie der Schalenaufnahme 4 befindet sich eine Schubeinheit 6. Die Schubeinheit 6 ist in der Lage, gleichzeitig mehrere, im vorliegenden Fall zwei Schalen 7 von der Schalenaufnahme 4 auf ein nachgeordnetes Wägeband 8 und zwei Schalen 3 von dem Füllband 2 auf die Schalenaufnahme 4 zu verschieben.

Eine solche Anordnung ist beispielsweise bei manchen Maschinen des Typs (sogenannten Traysealern) bekannt, bei denen einzelne separate Schalen gefüllt und versiegelt werden. Die Schalenaufnahme 4 wird hierbei in Querrichtung Q mit den darin befindlichen Schalen 7 in eine nicht näher dargestellte Versiegelungsstation verschoben und anschließend nach der Versiegelung wieder in die dargestellte Position zum Abtransport der versiegelten Schalen 7 gebracht. Dabei können auch zwei gegenläufig bewegte Schalenaufnahmen 4 vorgesehen werden, um die Schalen einer Schalenaufnahme zu versiegeln, während die andere Schalenaufnahme geräumt und wieder beschickt wird.

Die Schubeinheit 6 verschiebt demnach im vorliegenden Ausführungsbeispiel zwei versiegelte Schalen 7 gemeinsam auf das Wägeband 8.

Dem Wägeband 8 nachgeordnet ist ein Auszeichnungsband 9, über dem eine Etikettiereinheit 10 angeordnet ist. Die Etikettiereinheit 10 ist in der Lage, Etiketten auszudrucken und auf den zu etikettierenden Packungen 11 anzubringen.

Ein solches Etikett 12 ist beispielhaft in den Figuren dargestellt.

In der Darstellung gemäß Figur 1 und 2 befindet sich nur noch eine Warenpackung 7' auf dem Wägeband 8. Dies wird dadurch bewirkt, dass die Schalen 7', 7" sukzessive vom Wägeband 8 auf das Auszeichnungsband 9 weitergefördert werden.

Demzufolge befanden sich vor dem dargestellten Zustand die beiden Schalen 7', 7" gemeinsam auf dem Wägeband 8, auf das sie durch die Schubeinheit 6 geschoben wurden. Durch die Förderbewegung des Wägebandes 8 und des Auszeichnungsbandes 9 wurde die Schale 7" bereits auf das Auszeichnungsband gefördert.

Zunächst wurde jedoch das Summengewicht beider Schalen 7' und 7" ermittelt. In dem dargestellten Zustand, nach dem Weitertransport der Schale 7" auf das Auszeichnungsband 9 kann sodann das Einzelgewicht der Schale 7' ermittelt werden. Durch Subtraktion dieses Einzelgewichts von dem Gesamtgewicht ist somit zugleich das Gewicht der Schale 7" bekannt, sodass diese von der Etikettiereinheit 10 mit der entsprechenden Gewichtsangabe versehen werden kann.

Die Schubeinheit 6 umfasst verschiedene Schubelemente 13, 14, die einen größeren Abstand aufweisen als das Außenmaß der Packungen 7 in Transportrichtung T. Beim Einsatz der Schubeinheit 6 kommen die Packungen 7 an den jeweiligen Schubelementen 13, 14 zum Anschlag, sodass sich dadurch auch ein definierter Abstand zwischen den Schalen 7', 7" beim Transport auf das Wägeband 8 ergibt. Dieser Abstand sorgt dafür, dass die Schalen 7', 7" ohne gegenseitige Störung einzeln vom Wägeband 8 abgeführt werden können und somit die beschriebenen Wiegevorgänge ermöglicht sind.

Die Ausführungsform gemäß Figur 3 entspricht einer Anordnung mit einer sogenannten Rollenmaschine oder Tiefziehmaschine zum Herstellen der zu wiegenden Packungen. Diese Verpackungsmaschine 15 stellt eine Vielzahl zusammenhängender Packungen her, die in einer Schneidstation 16 durch einen Schneidvorgang von einander separiert werden. Der Schneidvorgang ist durch die Pfeile S in Figur 3 angedeutet.

Bei einer solchen Verpackungsmaschine 15 werden demnach stets eine Vielzahl von Packungen 17 in einem Arbeitstakt bereitgestellt. Im vorliegenden Ausführungsbeispiel werden jeweils sechs Packungen 17 in zwei Reihen und drei Spuren bezogen auf die Transportrichtung bereitgestellt. Diese matrixartige Anordnung von den Packungen 17 wird zunächst auf ein Schiebeband 18 verbracht, das quer zur Transportrichtung T in Querrichtung Q verschiebbar ist. Das Schiebeband 18 umfasst Einzelbänder oder einzelne Riemen, um die einer Spur zugehörigen Packungen 17, 17', 17" unabhängig von den Packungen der anderen Spuren in Transportrichtung T anzutreiben. Auf diese Weise können die Packungen 17, 17', 17" jeweils einzeln auf ein nachgeordnetes Wägeband 19 gefördert werden, die durch entsprechende Querverschiebung in Richtung Q des Schiebebandes 18 vor dem Wägeband 19 platziert sind.

Zu dem in Figur 4 dargestellten Zeitpunkt wurden bereits zwei Packungen 17" aus der ersten Spur vom Schiebeband 18 auf das Wägeband 19 verbracht. Anschließend wurde bereits eine Warenpackung 17" auf das Auszeichnungsband 20 weitertransportiert. Darüberhinaus hat sich das Schiebeband 18 weiter in Querrichtung Q bewegt, so dass nunmehr die Packungen 17' der nächsten Spur zur Zufuhr auf das Wägeband 19 bereit stehen. Durch Wiederholung dieser Vorgänge können anschließend auch die Packungen 17 der letzten Spur dem Schiebeband 18 dem Wägeband 19 zugeführt werden.

Der Wiegevorgang selbst sowie das Etikettieren kann anschließend in der anhand des Ausführungsbeispiels gemäß Figur 1 und 2 beschriebenen Weise vorgenommen werden.

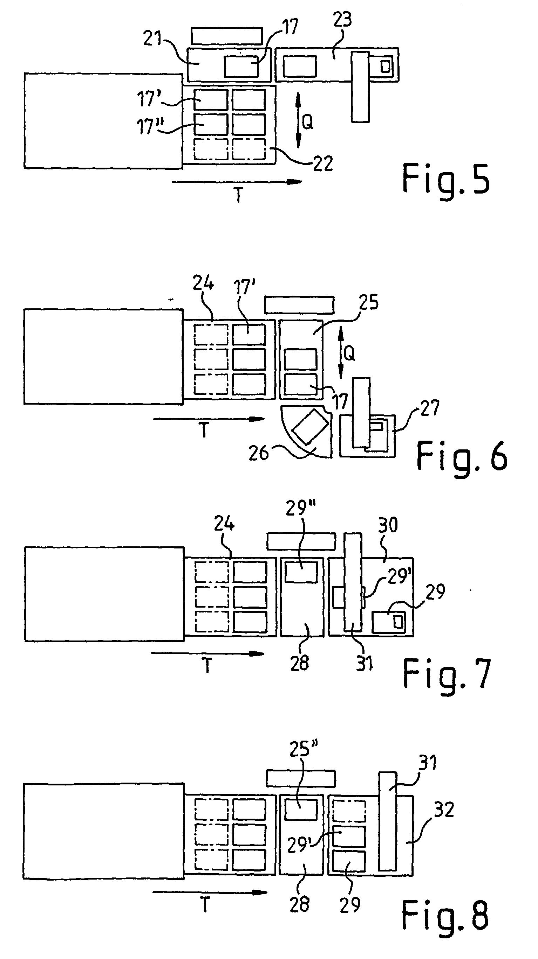

Die Ausführungsvariante gemäß Figur 5 entspricht im Wesentlichen dem vorgenannten Ausführungsbeispiel, wobei nunmehr jedoch das Wägeband 21 seitlich neben einem Austragband 22 angeordnet ist. Die Zufuhr auf das Wägeband 21 erfolgt nunmehr.von dem in Transportrichtung T umlaufenden Austragband 22, von dem jeweils die Packungen 17, 17', 17" einer Spur der in einem Arbeitstakt bereitgestellten Packungen dem Wägeband 21 in Querrichtung Q zugeführt werden. Hierzu kann eine in Querrichtung Q bewegliche, nicht näher dargestellte Schiebeeinrichtung vorgesehen werden. Der Wägevorgang auf dem Wägeband 21 sowie dem nachgeschaltetem Auszeichnungsband 23 wird wiederum in dem bereits vorgeschriebenen Subtraktionsverfahren durchgeführt.

Die Ausführungsvariante gemäß Figur 6 entspricht wiederum im Wesentlichen den beiden vorgenannten Ausführungsbeispielen, wobei nunmehr jedoch das Austragband 24 in Transportrichtung T umläuft und das Wägeband 25 in Querrichtung Q umlaufend hinter dem Austragband 24 angeordnet ist.

Bei dieser Ausführungsvariante werden durch Vorschub des Austragbandes 24 jeweils eine Reihe von Packungen 17, 17' gemeinsam dem Wägeband zugeführt. Im dargestellten Ausführungsbeispiel befinden sich somit zeitweise drei Packungen 17 auf dem Wägeband 25.

Die Abfuhr vom Wägeband 25 geschieht in Querrichtung Q auf ein Kurvenförderelement 26 mit nachgeschaltetem Auszeichnungsband 27.

Der Wiegevorgang selbst erfolgt wiederum im Subtraktionsverfahren. Zunächst werden alle drei auf dem Wägeband 25 befindlichen Packungen 17 gewogen und so das Gesamtwicht bestimmt. Nach Abfuhr der ersten Packung 17 auf das Kurvenförderelement 26 wird das Summengewicht der verbleibenden beiden Packungen 17 gewogen, wobei durch Subtraktion von dem zuvor ermittelten Gesamtgewicht das Einzelgewicht der bereits abgeführten Warenpackung 17 ermittelt wird. Die beiden anschließend noch auf dem Wägeband 25 befindlichen Packungen 17 werden in der vorgeschriebenen Weise ebenfalls durch Ermittlung des Summengewichts und Subtraktion des anschließend ermittelten Gewichtswertes bestimmt.

Der Etikettiervorgang vollzieht sich in dieser Ausführung wie vorbeschrieben.

Das Ausführungsbeispiel gemäß Figur 7 zeigt eine im Hinblick auf das Austragband 24 und das Wägeband 28 vergleichbare Anordnung. Das Wägeband 28 ist jedoch nunmehr für einen mehrspurigen Antrieb ausgelegt, d.h. es umfasst mindestens drei nebeneinander umlaufende Bänder oder Riemen, sodass die Packungen 29, 29', 29" sukzessive vom Wägeband 28 auf das Auszeichnungsband abgeführt werden können. Die Etikettiereinheit 31 ist dabei ebenfalls mehrspurig ausgelegt, sodass jede durchlaufende Warenpackung 29, 29', 29" mit der entsprechenden Gewichtsangabe versehen werden kann.

Der Wiegevorgang selbst erfolgt wiederum durch das oben beschriebene Subtraktionsverfahren, in dem jeweils das Einzelgewicht einer abgeführten Warenpackung durch Subtraktion des verbleibenden Summengewichts vom zuvor ermittelten Gesamtgewicht ermittelt wird.

Die Ausführungsform gemäß Figur 8 entspricht im Wesentlichen der Ausführung gemäß Figur 7, wobei nunmehr das Auszeichnungsband 31 getaktet betrieben wird. Das Auszeichnungsband 31 steht somit still, bis alle Packungen 29, 29', 29" einer Reihe auf das Auszeichnungsband 31 vom Wägeband 28 abgeführt ist. Anschließend werden in einem gemeinsamen Durchlauf unter der mehrspurigen Etikettiereinheit 31 alle Packungen 29, 29', 29" gleichzeitig auf dem Aufzeichnungsband etikettiert.

Die dargestellten Ausführungsbeispiele zeigen verschiedene Möglichkeiten, wie eine Wiegestation erfindungsgemäß in eine Verpackungsmaschine funktional integrierbar ist.

Allen Ausführungsbeispielen gemeinsam ist die Synchronisation der Arbeitsgeschwindigkeit des Wägebandes mit der Arbeitsgeschwindigkeit einer vorgeordneten Bearbeitungsstation durch eine entsprechende Steuereinheit.

### Bezugszeichenliste:

- 1: Verpackungsmaschine
- 2: Füllband
- 3: Schale
- 4: Schalenaufnahme
- 5: Hubeinheit
- 6: Schubeinheit
- 7: Schale
- 8: Wägeband
- 9: Auszeichnungsband
- 10: Etikettiereinheit
- 11: etikettierte Warenpackung
- 12: Etikett
- 13: Schubelement
- 14: Schubelement
- 15: Verpackungsmaschine
- 16: Schneidstation
- 17: Packung
- 18: Schiebeband
- 19: Wägeband
- 20: Auszeichnungsband
- 21: Wägeband
- 22: Austragband
- 23: Auszeichnungsband
- 24: Austragband
- 25: Wägeband
- 26: Kurvenförderelement
- 27: Auszeichnungsband
- 28: Wägeband
- 29: Warenpackung
- 30: Auszeichnungsband
- 31: Etikettiereinheit
- 32: Auszeichnungsband

## Patentansprüche

1. Verpackungsmaschine zur Herstellung von Packungen durch Verpacken von Packgut in Verpackungen mit wenigstens einer Bearbeitungsstation, wie einer Versiegelungsstation, einer Schneidstation oder dergleichen, und mit einer Wiegestation (8) für die Gewichtsbestimmung (7) der gefüllten und versiegelten Packungen, wobei die Wiegestation (8) und/oder die wenigstens eine Bearbeitungsstation wenigstens eine Steuereinheit umfassen, mittels der die Arbeitsgeschwindigkeit der Wiegestation (8) mit der Arbeitsgeschwindigkeit der vorgeordneten Bearbeitungsstation synchronisierbar ist, **dadurch gekennzeichnet, dass** mittels der Bearbeitungsstation die Bereitstellung einer Mehrzahl von Packungen in einem Takt vorgesehen ist, wobei die Wiegestation (8) zur Aufnahme von zwei oder mehreren Packungen (7) ausgebildet ist und eine Erfassung des Gewichts von zwei oder mehreren Packungen (7, 7') sowie des durch anschließende Zufuhr oder Abfuhr einer einzelnen Packung (7') oder einer Anzahl gemeinsam zu wiegender Packungen veränderten Gewichts vorgesehen ist, wobei das Gewicht einer einzelnen Packung oder einer Anzahl gemeinsam zu wiegender Packungen aus der Differenz zwischen den so ermittelten Gewichten bestimmbar ist.

2. Verpackungsmaschine nach Anspruch 1, **dadurch gekennzeichnet, dass** eine gemeinsame Steuereinheit für die Wiegestation (8) und wenigstens eine Bearbeitungsstation der Verpackungsmaschine (1) vorgesehen ist.

3. Verpackungsmaschine nach einem der vorgenannten Ansprüche, **dadurch gekennzeichnet, dass** die Verpackungsmaschine (1) für alle vorgesehenen Bearbeitungsstationen sowie die Wiegestation (8) eine gemeinsame Steuereinheit umfasst.

4. Verpackungsmaschine nach einem der vorgenannten Ansprüche, **dadurch gekennzeichnet, dass** die Wiegestation stationär angeordnet ist.

5. Verpackungsmaschine nach einem der vorgenannten Ansprüche, **dadurch gekennzeichnet, dass** eine Zufuhreinheit zur Zufuhr der Packungen zur Wiegestation vorgesehen ist.

6. Verpackungsmaschine nach einem der vorgenannten Ansprüche, **dadurch gekennzeichnet, dass** eine Zufuhreinheit (6) zur Zufuhr der zu wiegenden Packungen zur Wiegestation (8) zwischen der vorgeordneten Bearbeitungsstation und der Wiegestation (8) vorgesehen ist.

7. Verpackungsmaschine nach einem der vorgenannten Ansprüche, **dadurch gekennzeichnet, dass** die Arbeitsgeschwindigkeit der Zufuhreinheit (6) mit der Arbeitsgeschwindigkeit einer Versiegelungsstation und/oder der Wiegestation (8) synchronisierbar ist.

8. Verpackungsmaschine nach einem der vorgenannten Ansprüche, **dadurch gekennzeichnet, dass** mittels der Zufuhreinheit (6) die Zufuhr von zwei oder mehreren Packungen (7) zur Wiegestation (6) im Gleichtakt mit den Versiegelungsstation vorgesehen ist.

9. Verpackungsmaschine nach einem der vorgenannten Ansprüche **dadurch** gekenntzeichnet, dass die Wiegestation für eine Gewichtserfassung während der Bewegung einer oder mehreren Packungen ausgebildet ist.

10. Verpackungsmaschine nach einem der vorgenannten Ansprüche, **dadurch gekennzeichnet, dass** die Wiegestation ein Wägeband (8) mit einer Steuerung zur Synchronisation der Bandgeschwindigkeit mit der Arbeitsgeschwindigkeit der vorgeordneten Bearbeitungsstation und/oder der Zufuhreinheit (6) umfasst.

11. Verpackungsmaschine nach einem der vorgenanten Ansprüche, **dadurch gekennzeichnet, dass** eine einzelne Abfuhr der Packungen (7) von der Wiegestation (8) vorgesehen ist.

12. Verpackungsmaschine nach einem der vorgenannten Ansprüche, **dadurch gekennzeichnet, dass** eine Etikettierstation (10) der Wiegestation (8) nachgeordnet ist.

13. Verpackungsmaschine nach einem der vorgenannten Ansprüche, **dadurch gekennzeichnet, dass** die Etikettierstation (10) zum Ausdruck von produktspezifischen gewichtsunabhängigen Daten und/oder zum Ausdruck von gewichtsabhängigen Daten ausgebildet ist.

14. Verpackungsmaschine nach einem der vorgenannten Ansprüche, **dadurch gekennzeichnet, dass** der Wiegestation (8) eine Sortierschleuse nachgeordnet ist.

15. Verpackungsmaschine nach einem der vorgenannten Ansprüche, **dadurch gekennzeichnet, dass** eine zusätzliche Kontrolleinheit zur Kontrolle der Packungen vorgesehen ist.

16. Verfahren zur Herstellung von Packungen durch Verpacken von Packgut in Verpackungen, wobei die Packungen von einer Bearbeitungsstation, einer Versiegelungsstation, einer Scheidstation oder dergleichen bereitgestellt werden, wobei unmittelbar nach der Bearbeitung durch die Bearbeitungsstation eine Gewichtsbestimmung der gefüllten und versiegelten Packungen vorgenommen wird, wobei die Arbeitsgeschwindigkeit beim Wiegevorgang mit der Arbeitsgeschwindigkeit der vorgeordneten Bearbeitung synchronisiert wird, **dadurch gekennzeichnet, dass** mittels der Bearbeitungsstation die Bereitstellung einer Mehrzahl von Packungen in einem Takt vorgesehen sind und von der Wiegestation zwei oder mehrere Packungen aufgenommen werden können und eine Erfassung des Gewichts von zwei oder mehreren Packungen (7, 7') sowie des durch anschließende Zufuhr oder Abfuhr einer einzelnen Packung (7') oder einer Anzahl gemeinsam zu wiegender Packungen veränderten Gewichts vorgesehen ist, wobei das Gewicht einer einzelnen Packung oder einer Anzahl gemeinsam zu wiegender Packungen aus der Differenz zwischen den so ermittelten Gewichten bestimmt wird.

## Claims

1. A packaging machine (1) for producing packages by packaging packaged items in packagings with at least one processing station, such as a sealing station, a cutting station or the like, and with a weighing station (8) for weight determination (7) of the filled and sealed packages, wherein the weighing station (8) and/or the at least one processing station comprise at least one control unit, by means of which the operating speed of the weighing station (8) can be synchronised with the operating speed of the upstream processing station, **characterised in that** the provision of a plurality of packages is provided in one cycle by means of the processing station, wherein the weighing station (8) is designed to accommodate two or more packages (7) and detection of the weight of two or more packages (7,7') is provided, as well as detection of the weight varied by subsequent feeding or discharge of an individual package (7') or of a number of packages to be weighed together, wherein the weight of an individual package or a number of packages to be weighed together can be determined from the difference between the weights thus determined.

2. A packaging machine according to Claim 1, **characterised in that** a common control unit for the weighing station (8) and at least one processing station of the packaging machine (1) is provided.

3. A packaging machine according to any one of the preceding Claims, **characterised in that** the packaging machine (1) comprises a common control unit for all the processing stations provided and also for the weighing station (8).

4. A packaging machine according to any one of the preceding Claims, **characterised in that** the weighing station is arranged stationary.

5. A packaging machine according to any one of the preceding Claims, **characterised in that** a feed unit is provided to feed the packages to the weighing station.

6. A packaging machine according to any one of the preceding Claims, **characterised in that** a feed unit (6) is provided to feed the packages to be weighed to the weighing station (8) between the upstream processing station and the weighing station (8).

7. A packaging machine according to any one of the preceding Claims, **characterised in that** the operating speed of the feed unit (6) can be synchronised with the operating speed of a sealing station and/or the weighing station (8).

8. A packaging machine according to any one of the preceding Claims, **characterised in that** the feeding of two or more packages to the weighing station (8) in a synchronised cycle with the sealing station is provided by means of the feed unit (6).

9. A packaging machine according to any one of the preceding Claims, **characterised in that** the weighing station is designed for weight detection during the movement of one or more packages.

10. A packaging machine according to any one of the preceding Claims, **characterised in that** the weighing station comprises a weighing belt (8) with a controller for synchronising the belt speed with the operating speed of the upstream processing station and/or the feed unit (6).

11. A packaging machine according to any one of the preceding Claims, **characterised in that** an individual discharge of packages (7) from the weighing station (8) is provided.

12. A packaging machine according to any one of the preceding Claims, **characterised in that** a labelling station (10) is arranged downstream of the weighing station (8).

13. A packaging machine according to any one of the preceding Claims, **characterised in that** the labelling station (10) is designed to print out product-specific weight independent data and/or to print out weight-dependent data.

14. A packaging machine according to any one of the preceding Claims, **characterised in that** a sorting ejector is arranged downstream of the weighing station (8).

15. A packaging machine according to any one of the preceding Claims, **characterised in that** an additional control unit is provided for controlling the packagings.

16. A method of producing packages by packaging packaged items in packagings, wherein the packages are provided by a processing station, a sealing station, a cutting station or the like, wherein immediately after the processing by the processing station a weight determination of the filled and sealed packages is carried out, wherein the operating speed during the weighing process is synchronised with the operating speed of the upstream processing, **characterised in that** the provision of a plurality of packages is provided in one cycle by means of the processing station and two or more packages can be accommodated by the weighing station, and a detection of the weight of two or more packages (7,7') is provided, as well as a detection of the weight varied by subsequent feeding or discharge of an individual package (7') or of a number of packages to be weighed together, wherein the weight of an individual package or a number of packages to be weighed together is determined from the difference between the weights thus determined.

## Revendications

1. Machine d'emballage pour fabriquer des paquets en emballant un produit dans des emballages, avec au moins une station de traitement telle qu'une station de scellage, une station de coupe ou une station similaire, et une station de pesage (8) pour définir le poids des emballages remplis et scellés, étant précisé que la station de pesage (8) et/ou la ou les stations de traitement comprennent au moins une unité de commande à l'aide de laquelle la vitesse de travail de la station de pesage (8) est apte à être synchronisée par rapport à la vitesse de travail de la station de traitement prévue en amont, **caractérisée en ce qu'**à l'aide de la station de traitement, plusieurs paquets sont fournis en une seule phase, étant précisé que la station de pesage (8) est conçue pour recevoir deux paquets (7) ou plus, et qu'il est prévu un enregistrement du poids de deux paquets (7, 7') ou plus et du poids modifié par l'amenée ou l'évacuation consécutive d'un paquet individuel (7') ou d'un certain nombre de paquets à peser ensemble, et que le poids d'un paquet individuel ou d'un certain nombre de paquets à peser ensemble est apte à être défini à partir de la différence entre les poids ainsi déterminés.

2. Machine d'emballage selon la revendication 1, **caractérisée en ce qu'**il est prévu une unité de commande commune pour la station de pesage (8) et pour au moins une station de traitement de la machine d'emballage (1).

3. Machine d'emballage selon l'une des revendications précédentes, **caractérisée en ce que** ladite machine d'emballage (1) comprend une unité de commande commune pour toutes les stations de traitement prévues et pour la station de pesage (8).

4. Machine d'emballage selon l'une des revendications précédentes, **caractérisée en ce que** la station de pesage est stationnaire.

5. Machine d'emballage selon l'une des revendications précédentes, **caractérisée en ce qu'**il est prévu une unité d'amenée pour amener les paquets dans la station de pesage.

6. Machine d'emballage selon l'une des revendications précédentes, **caractérisée en ce qu'**une unité d'amenée (6) destinée à amener les paquets à peser dans la station de pesage (8) est prévue entre la station de traitement prévue en amont et ladite station de pesage (8).

7. Machine d'emballage selon l'une des revendications précédentes, **caractérisée en ce que** la vitesse de travail de l'unité d'amenée (6) est apte à être synchronisée par rapport à la vitesse de travail d'une station de scellage et/ou de la station de pesage (8).

8. Machine d'emballage selon l'une des revendications précédentes, **caractérisée en ce qu'**à l'aide de l'unité d'amenée (6), l'amenée de deux paquets (7) ou plus dans la station de pesage (8) est prévue au même rythme que la station de scellage.

9. Machine d'emballage selon l'une des revendications précédentes, **caractérisée en ce que** la station de pesage est conçue pour enregistrer le poids pendant le déplacement d'un ou plusieurs paquets.

10. Machine d'emballage selon l'une des revendications précédentes, **caractérisée en ce que** la station de pesage comprend une bande de pesage (8) avec une commande pour synchroniser la vitesse de la bande par rapport à la vitesse de travail de la station de traitement placée en amont et/ou de l'unité d'amenée (6).

11. Machine d'emballage selon l'une des revendications précédentes, **caractérisée en ce qu'**il est prévu une évacuation individuelle des paquets (7) à partir de la station de pesage (8).

12. Machine d'emballage selon l'une des revendications précédentes, **caractérisée en ce qu'**une station d'étiquetage (10) est prévue en aval de la station de pesage (8).

13. Machine d'emballage selon l'une des revendications précédentes, **caractérisée en ce que** la station d'étiquetage (10) est conçue pour imprimer des données indépendantes du poids et propres au produit et/ou pour imprimer des données dépendantes du poids.

14. Machine d'emballage selon l'une des revendications précédentes, **caractérisée en ce qu'**un sas de tri est prévu en aval de la station de pesage (8).

15. Machine d'emballage selon l'une des revendications précédentes, **caractérisée en ce qu'**il est prévu une unité de contrôle supplémentaire pour le contrôle des paquets.

16. Procédé pour fabriquer des paquets en emballant un produit dans des emballages, étant précisé que les paquets sont préparés par une station de traitement, une station de scellage et une station de coupe ou une station similaire, qu'immédiatement après le traitement par la station de traitement, le poids des emballages remplis et scellés est défini, et que la vitesse de travail lors du pesage est synchronisée par rapport à la vitesse de travail du traitement prévu en amont, **caractérisé en ce qu'**à l'aide de la station de traitement, plusieurs paquets sont fournis en une seule phase, que deux paquets ou plus peuvent être reçus par la station de pesage et qu'il est prévu un enregistrement du poids de deux paquets (7, 7') ou plus et du poids modifié par l'amenée ou l'évacuation consécutive d'un paquet individuel (7') ou d'un certain nombre de paquets à peser ensemble, étant précisé que le poids d'un paquet individuel ou d'un certain nombre de paquets à peser ensemble est défini à partir de la différence entre les poids ainsi déterminés.
